# EUROPÄISCHE PATENTANMELDUNG

(11) **EP 0 806 320 A2**
(43) Veröffentlichungstag der Anmeldung: **12.11.1997**
(21) Anmeldenummer: 97107534.6
(22) Anmeldetag: 07.05.1997
(51) Int. Cl.: B60N 2/44

(54) **Sitz, insbesondere Kraftfahrzeugsitz**

(30) Priorität: 10.05.1996 DE 29608494 U
(71) Anmelder: Recticel JCI Formschaum GmbH, 32339 Espelkamp (DE)
(72) Erfinder: Fromme, Heinz Detlef, 32361 Preussisch Oldendorf (DE); Siefert, Bernhard, 49152 Bad Essen (DE)
(74) Vertreter: Van Reet, Joseph

(57) **Zusammenfassung**

Ein Sitz, insbesondere Kraftfahrzeugsitz, weist einen aus Schaumstoff bestehenden Polsterkörper (1)auf, in den zur Festlegung eines mit zumindest einem Halteteil versehenen Sitzbezuges oder dgl. ein Befestigungselement (2) eingeformt ist. Als Befestigungselement (2) ist ein Faserseil (5) vorgesehen, dessen Oberfläche (6) zumindest bereichsweise mit dem Schaumstoff eine form- und stoffschlüssige Haftverbindungszone bildet.

## Beschreibung

Die Erfindung betrifft einen Sitz, insbesondere Kraftfahrzeugsitz, nach dem Oberbegriff des Anspruches 1.

Bekannte Fahrzeugsitze (DE 295 06 306 U1) weisen ein Schaumstoff-Polsterteil auf, in das bei der Herstellung aus Polyurethan (PUR) ein Trägerprofil als Befestigungselement für einen Sitzbezug eingeschäumt wird. Ein derartiges Trägerprofil-Element ist sowohl bei der Herstellung als auch bei der Verarbeitung in dem Polsterteil mit hohem Aufwand verbunden, so daß damit die Gestehungskosten des Polsterteils insgesamt nachteilig erhöht sind.

Der Erfindung liegt die Aufgabe zugrunde, einen Sitz, insbesondere Kraftfahrzeugsitz zu schaffen, dessen Polsterteil mit einem preiswerten und die Gestehungskosten senkenden Befestigungselement versehen ist und das mit geringem technischen Aufwand eine hinreichend stabile Verankerung eines Sitzbezuges oder dgl. ermöglicht.

Die Erfindung löst diese Aufgabe durch einen Sitz mit den Merkmalen des Anspruches 1. Hinsichtlich wesentlicher weiterer Ausgestaltungsmerkmale wird auf die Ansprüche 2 bis 8 verwiesen.

Der erfindungsgemäß ausgebildete Sitz weist in seinem Schaumstoff-Polsterkörper ein Befestigungselement in Form eines Faserseiles auf, das als preiswert verfügbares Halbzeug so in den Schaumstoff integriert ist, daß die fasrige Oberfläche des Seils und/oder dessen Oberflachenkontur mit dem umgebenden Schaumstoff bei der Herstellung des Polsterkörpers eine Haftverbindungszone bildet und über eine form- und stoffschlüssige Haftungswirkung zwischen den verbundenen Materialien eine überraschend ausrißstabile Festlegung des Faserseils erreicht ist.

Das Faserseil kann mit insgesamt verringertem technischen Aufwand und einer weitgehend beliebigen Verlegekontur in einen zur Herstellung des Polsterkörpers vorgesehenen Formkörper über einen automatischen Einlegevorgang postioniert werden, wobei kundenspezifisch unterschiedliche Verlegekonturen mit geringem Umrüstaufwand und ohne Zeitverlust realisierbar sind. In der Einbaulage ist danach auch bei bereichsweise hohen Zugbelastungen am Faserseil, beispielsweise bei der Montage eines den Sitzbezug festlegenden Halteteils , ein ungewolltes Ablösen des Faserseiles vom dieses umgebenden Schaumstoff mit hinreichender Sicherheit verhindert.

Das eingeformte Faserseil kann in zweckmäßiger Ausführung als eine mehrere Seilstränge aufweisende Kordel vorgesehen sein, so daß zusätzlich zur Faserstruktur an der Seiloberfläche deren Oberflächenkontur mit jeweiligen in Längsrichtung des Faserseiles verlaufenden Profilvertiefungen wirksam ist und diese als Schaumstoff-Aufnahmeräume die Haftung des Faserseiles im Polsterkörper über diese formschlüssigen Verbindungszonen weiter verbessern.

Für einen bestimmungsgemäßen Einsatz ist das beispielsweise in der Sitzflächenkontur verlaufende Faserseil formelastisch im Polsterkörper so festgelegt, daß bei entsprechender Druckbelastung des Sitzbereiches die Federungseigenschaften des Polsterkörpers unbeeinflußt sind, das Faserseil synchron zum druckverformten Bereich des Schaumstoffs mitbewegt werden kann, damit eine Beeinflussung des Sitzkomforts weitgehend ausgeschlossen ist und das Faserseil eine auch bei örtlichen Überbelastungen langzeitstabile Verankerung in seiner Einbaulage aufweist.

Weitere Einzelheiten und Vorteile der Erfindung ergeben sich aus der nachfolgenden Beschreibung und der Zeichnung, die ein Ausführungsbeispiel des erfindungsgemäßen Sitzes veranschaulicht. In der Zeichnung zeigen:
- Fig. 1: eine Prinzipdarstellung eines Polsterteiles für einen Fahrzeugsitz in einer Unteransicht,
- Fig. 2: eine Schnittdarstellung des Polsterteiles gemäß einer Linie II - II in Fig. 1 mit einem zur Herstellung vorgesehenen Formteil,
- Fig. 3: eine vergrößerte Ausschnittsdarstellung eines in den Schaumstoff des Polsterkörpers integrierten Faserseiles gemäß einer Linie III - III in Fig. 1,
- Fig. 4: eine Schnittdarstellung des Polsterteils mit einer der Verlegekontur des Faserseils folgenden Schnittführung in Seitenansicht,
- Fig. 5: eine vergrößerte Ausschnittsdarstellung ähnlich Fig. 4 gemäß einer Linie V - V in Fig. 1,
- Fig. 6: eine vergrößerte Einzeldarstellung eines das Faserseil endseitig aufnehmenden Ankerelementes,
- Fig. 7: eine Seitenansicht des Ankerelementes gemäß einer Linie VII - VII in Fig. 6,
- Fig. 8: eine Draufsicht des Ankerelementes gemäß Fig. 7, und
- Fig. 9 bis Fig. 11: jeweilige Ausschnittsdarstellungen des Faserseiles und dessen endseitige Festlegung im Polsterkörper.

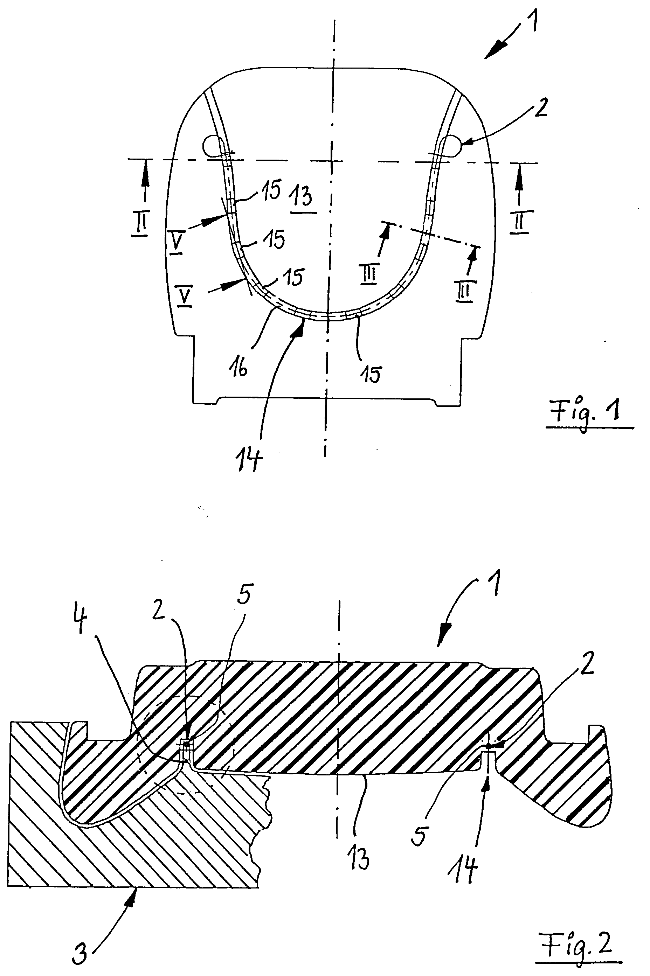

Fig. 1 zeigt einen insgesamt mit 1 bezeichneten Polsterkörper aus Schaumstoff, der für einen nicht näher dargestellten Sitz, insbesondere Kraftfahrzeugsitz, vorgesehen ist. Zur Festlegung eines ein Halteteil aufweisenden Sitzbezuges (nicht dargestellt) ist in die Schaumstoffkontur ein Befestigungselement 2 eingeformt.

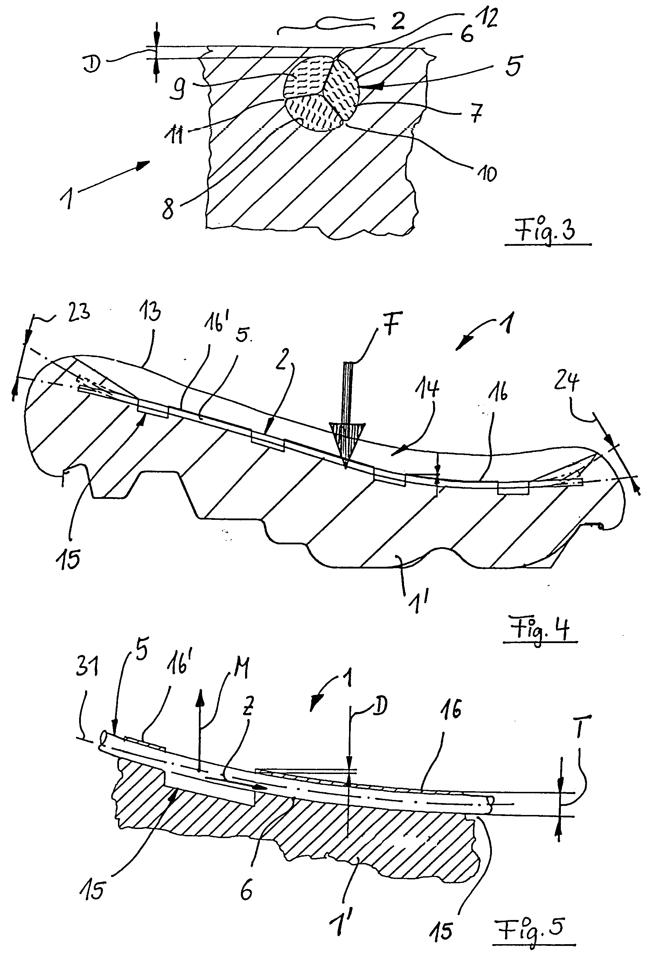

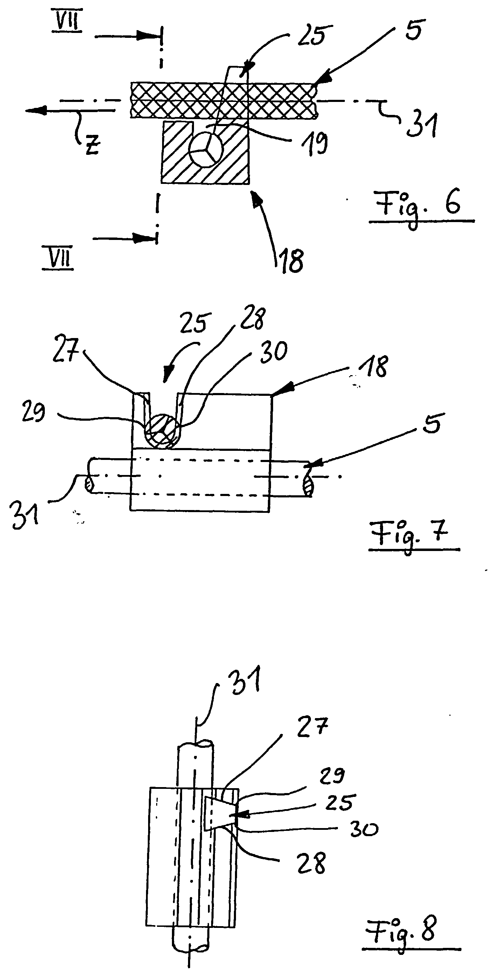

In Fig. 2 ist der Polsterkörper 1 in einer Endphase bei dessen Herstellung veranschaulicht, wobei die bereits geformte Kontur des Polsterkörpers 1 in einem allgemein mit 3 bezeichneten Formteil abgestützt ist. Während der Herstellung des Polsterkörpers 1 wird das Befestigungselement 2 über einen Stützansatz 4 des Formteils 3 gehalten (linke Seite der Darstellung), so daß das zur Formfüllung eingebrachte Schaummaterial das Befestigungselement 2 zumindest bereichsweise umströmen kann und das Befestigungselement 2 danach in den verfestigten Schaumstoff eingebettet ist (rechte Seite der Darstellung).

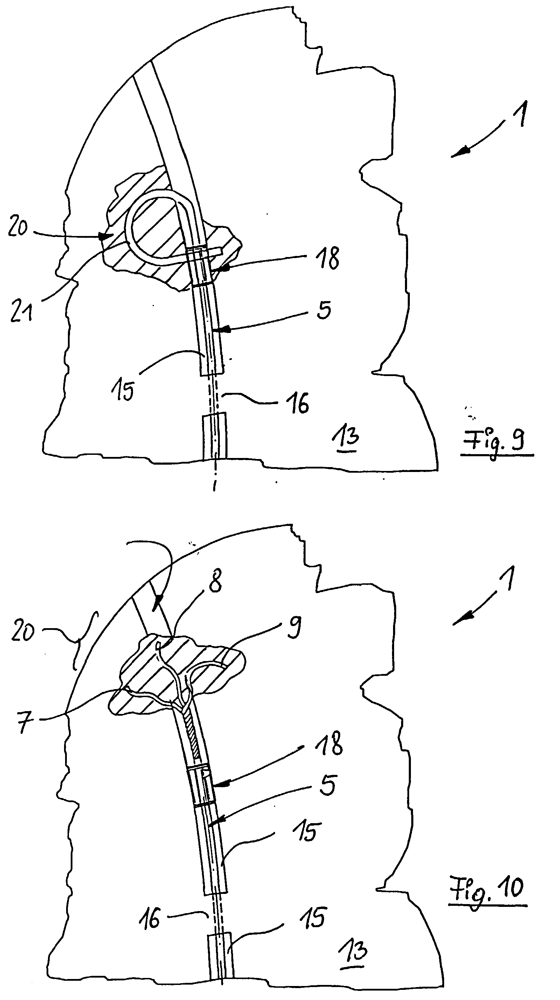

Fig. 3 zeigt in einer vergrößerten Ausschnittsdarstellung das in Einbaulage befindliche Befestigungselement 1, wobei dieses in erfindungsgemäßer Ausbildung als ein in den Schaumstoff integriertes Faserseil 5 vorgesehen ist. Dieses Faserseil 5 weist vorteilhaft eine Oberflächenkontur 6 auf, die zum umgebenden Schaumstoff hin eine form- und stoffschlüssige Haftverbindungszone derart bildet, daß sowohl die Faserstruktur des Faserseils 5 als auch dessen Querschnittsform einen innigen Haftverbund zum Schaumstoff hin bewirken.

In vorteilhafter Ausführung ist das Faserseil 5 als eine aus mehreren verdrillten Seilsträngen 7, 8, 9 bestehende Kordel ausgebildet, so daß die Oberflächenkontur 6 jeweilige Längsfurchungen 10, 11, 12 aufweist und damit verbesserte, formschlüssige Verbindungszonen für eine zug- und verdrehfeste Haftung geschaffen sind.

Das Faserseil 5 besteht in vorteilhafter Ausführung aus Naturfasern, von denen einzelne Faserteile (nicht dargestellt) von der rauhen Oberflächenkontur 6 so abragen können, daß die vorbeschriebene stoffschlüssige Haftverbindungszone mit dem Schaumstoff gebildet werden kann. Ebenso ist denkbar, ein Faserseil 5 aus synthetischen Fasern zu verwenden.

Die geschnittene Darstellung gemäß Fig. 4 verdeutlicht in Zusammenschau mit Fig. 2 die Verlegekontur des Faserseiles 5, das im Polsterkörper 1 nahe einer von dessen Oberflache 13 abgesenkten Formrinne 14 verläuft, in der jeweils das Faserseil 5 abschnittsweise freigebende Aufnahmeräume 15 für das am Sitzbezug befindliche Halteteil (nicht dargestellt) vorgesehen sind.

Die vergrößerte Ausschnittsdarstellung gemäß Fig. 5 verdeutlicht die Einbaulage des Faserseiles 5 zwischen zwei Aufnahmeräumen 15, wobei in diesem Zwischenbereich die Oberflachenkontur 6 des Faserseiles 5 eine vollflächige Haftung zu einem Teilbereich 1' des Polsterkörpers 1 hin bildet, so daß ein oberhalb des Faserseiles 5 befindlicher Schaumstoffanteil 16, 16' mit einem geringen Überdeckungsmaß D ausgebildet werden kann.

Getestet wurde beispielsweise eine Verringerung der Überdeckung D bis auf ein Maß von ca. 1 mm, ohne daß bei entsprechenden Meßkräften (Pfeil M) eine Bildung von Ausrißstellen zwischen Faserseil 5 und Schaumstoff feststellbar war. Damit kann das Faserseil 5 in einer insgesamt geringen Einbautiefe T (Fig. 5) in dem Polsterkörper 1 so eingeschäumt werden, daß für die Montage des nicht dargestellten Sitzbezuges eine wesentliche Vereinfachung beim Anbringen des Halteteiles am Faserseil 5 im Bereich des Aufnahmeraumes 15 erreicht ist.

In Fig. 6 bis 8 ist das Faserseil 5 in Verbindungsstellung mit einem endseitigen Ankerelement 18 veranschaulicht, wobei dieses das Faserseil 5 derart umgreift, daß das Faserseil 5 über das eine Aufnahmekontur 19 aufweisende und in die Formrinne 16 eingebrachte Ankerelement 18 am Polsterkörper 1 festgelegt ist (Fig. 9 bis 11).

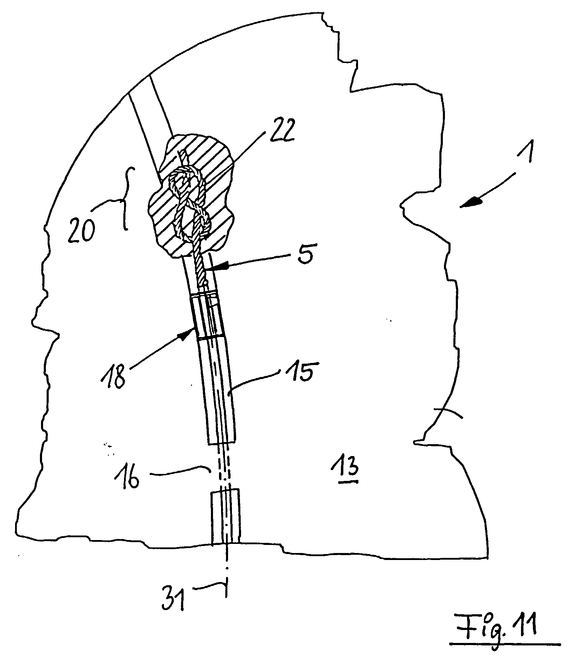

In zweckmäßiger Ausführung weist das Faserseil 5 jeweils endseitig unmittelbar im Polsterteil 1 festlegbare Formerweiterungen 20 auf, wobei die Formerweiterung gemäß Fig. 9 von einer Schlaufe 21, gemäß Fig. 10 von den jeweils vereinzelten Seilsträngen 7, 8, 9 der Kordel und gemäß Fig. 11 von einem knoten 22 gebildet ist. Mit diesen Formerweiterungen ist eine ausrißstabile Festlegung des Faserseiles 5 im Polsterkörper 1 erreicht, so daß bei einer flächigen oder punktuellen Druckbelastung (Pfeil F, Fig. 4) des Polsterkörpers 1 die jeweiligen erweiterten Endbereiche 20 des Faserseiles 5 gemeinsam mit dem Schaumstoff verformt werden können (Schwenkwinkel 23, 24, in Fig. 4) und auch in einer Zugrichtung Z am Faserseil 5 wirksame Kräfte gemeinsam über die Haftungsverbindungszone und die Formerweiterungen 20 beschädigungsfrei im Polsterkörper 1 aufgenommen werden.

Bei der Verlegung des Faserseiles 5 mit einer Schlaufe 21 (gemäß Fig. 9) kann deren Endbereich bis zum Ankerelement 18 zurückgeführt und hier in einer Klemmnut 25 (Fig. 7, Fig. 8) so festgelegt werden, daß deren konische Flanken 27, 28 im vorderen Kantenbereich 29, 30 nach Art eines Widerhakens am Faserseil 5 angreifen und eine ungewollte Bewegung dieses Seilbereiches in Richtung der Seilmittellängsebene 31 (Pfeil Z, Z' in Fig. 5 und 6) zuverlässig verhindert ist.

## Patentansprüche

1. Sitz, insbesondere Kraftfahrzeugsitz, mit einem aus Schaumstoff bestehenden Polsterkörper (1), in den zur Festlegung eines mit zumindest einem Halteteil versehenen Sitzbezuges oder dgl. ein Befestigungselement (2) eingeformt ist, **dadurch gekennzeichnet**, daß als Befestigungselement (2) ein Faserseil (5) vorgesehen ist, dessen Oberfläche (6) zumindest bereichsweise mit dem Schaumstoff eine form- und stoffschlüssige Haftverbindungszone bildet.

2. Sitz nach Anspruch 1, dadurch gekennzeichnet, daß das Faserseil (5) als eine aus mehreren verdrillten Seilsträngen (7, 8, 9) bestehende Kordel ausgebildet ist, deren Oberflächenkontur (6) jeweilige Längsfurchungen (10, 11, 12) aufweist.

3. Sitz nach einem der Anspruch 1 oder 2, dadurch gekennzeichnet, daß das Faserseil (5) aus Naturfasern und/oder synthetischen Fasern besteht.

4. Sitz nach einem der Ansprüche 1 bis 3, dadurch gekennzeichnet, daß das eingeschäumte Faserseil (5) im Polsterkörper (1) nahe einer von dessen Oberfläche (13) abgesenkten Formrinne (14) verläuft und in dieser jeweils das Faserseil (5) abschnittsweise freigebende Aufnahmeräume (15) für das am Sitzbezug befindliche Halteteil vorgesehen sind.

5. Sitz nach einem der Ansprüche 1 bis 4, dadurch gekennzeichnet, daß das Faserseil (5) jeweils endseitig mit einer unmittelbar im Polsterteil (1) festlegbaren Formerweiterung (20) versehen ist.

6. Sitz nach Anspruch 5, dadurch gekennzeichnet, daß das Faserseil (5) als Formerweiterung (20) eine Schlaufe (21) aufweist.

7. Sitz nach einem der Ansprüche 1 bis 6, dadurch gekennzeichnet, daß das Faserseil (5) endseitig über ein eine Aufnahmekontur (19) aufweisendes und in die Formrinne (14) eingebrachtes Ankerelement (18) am Polsterkörper (1) festgelegt ist.

8. Sitz nach Anspruch 7, dadurch gekennzeichnet, daß das Ankerelement (18) eine das Faserseil (5) im Bereich der Schlaufe (21) aufnehmende Klemmnut (25) aufweist.
